# EUROPÄISCHE PATENTSCHRIFT

(11) **EP 1 499 809 B1**
(45) Veröffentlichungstag und Bekanntmachung des Hinweises auf die Patenterteilung: **05.10.2005**
(21) Anmeldenummer: 03722364.1
(22) Anmeldetag: 28.03.2003
(51) Int. Cl.: F16B 47/00

(54) **SAUGNAPFGERÄT MIT FEDERSPANNZWINGE**
SUCTION-CUP DEVICE COMPRISING A SPRING-LOADED CLAMP CLIP
APPAREIL A VENTOUSE POURVU D'UN ETRIER DE SERRAGE A RESSORT

(30) Priorität: 30.04.2002 DE 20206846 U
(43) Veröffentlichungstag der Anmeldung: 26.01.2005
(73) Patentinhaber: wolfcraft GmbH, 56746 Kempenich (DE)
(72) Erfinder: DEGEN, Klemens, 56745 Weibern (DE)
(74) Vertreter: Grundmann, Dirk
(86) Internationale Anmeldenummer: PCT/EP2003/003235
(87) Internationale Veröffentlichungsnummer: WO 2003/093693

(56) Entgegenhaltungen:
- DE-A- 2 217 638
- DE-C- 475 317
- US-A- 3 159 370
- US-A- 4 944 548

## Beschreibung

Die Erfindung betrifft ein Saugnapfgerät mit einem napfförmigen Stützkörper und einer in der Napföffnung des Stützkörpers einliegenden Saugmembran, an deren Zentrum eine Zugstange angreift, die mit ihrem freien Ende eine zentrale Öffnung des Stützkörpers durchragt, wobei an dem freien Ende ein um eine Schwenkachse schwenkbares Spannglied angelenkt ist, welches Spannglied um die Schwenkachse von einer Lösestellung über eine Totpunktlage in eine Spannstellung schwenkbar ist.

Ein gattungsgemäße Saugnapfgerät wird von der DE 2217 638 A offenbart. Dort ist an der Zugstange ein Haken angelenkt, der im Bereich der Anlenkstelle einen gabelförmigen Fortsatz ausbildet, der die Funktion eines Spanngliedes hat. Um etwas an den Haken zu hängen, muss die Schwenkachse in der Horizontalen verlaufen.

Der Erfindung liegt die Aufgabe zugrunde, das gattungsgemäße Saugnapfgerät gebrauchsvorteilhaft weiterzubilden.

Gelöst wird die Aufgabe durch die in den Ansprüchen angegebene Erfindung, wobei der Anspruch 1 zunächst und im Wesentlichen vorsieht, dass dem Spannglied eine Federspannzwinge zugeordnet ist, mit zwei um eine Gelenkachse schwenkbar miteinander verbundenen Armen, die jeweils am einen Ende Spannbacken und am anderen Ende Betätigungsabschnitte aufweisen, wobei die Gelenkachse quer zur Schwenkachse verläuft. Durch Öffnen der beiden Spannbacken, was durch Gegeneinanderbringen der beiden Betätigungsabschnitte erfolgt, kann die Spannzwinge in einem Greif-Bereitschaftsstellung gebracht werden. Um einen Gegenstand mittels des Saugnappfgerätes an einer vertikal verlaufenden Wand oder anderweitigen Horizontalfläche zu befestigen, muss die Schwenkachse vertikal verlaufen, damit die Gelenkachse in der Horizontalen verläuft, so dass die Spannbacken nach unten weisen. Um in dieser Stellung das Saugnapfgerät an der Vertikalfläche zu befestigen bzw. von einer befestigten Stellung zu lösen, muss die gesamte Federspannzwinge um die Schwenkachse geschwenkt werden. Dies alles vollzieht sich um eine vertikal ausgerichtete Achse, so dass bei der Spann- bzw. Lösebetätigung das Spannmaul der Spannzwinge immer nach unten weist. In der bevorzugten Ausgestaltung der Erfindung sind die beiden Arme wippenartig einander zugeordnet. Die Betätigungsabschnitte werden zum Auseinanderbringen der Spannkraft gegen die Kraft einer Feder verlagert. Diese Feder bringt auch die Spannkraft auf. Das Spannglied kann darüber hinaus einen zwei im Wesentlichen senkrecht zueinander stehende Flächen aufweisenden Fortsatz eines bogenförmigen Spannabschnittes eines der beiden Arme ausbilden. Dieser Fortsatz kann dem aus Kunststoff gefertigten Arm angespritzt sein. Der Fortsatz kann die Form eines Pyramidenstumpfes besitzen mit einer gabelförmigen Öffnung, welche die Zugstange lagert. Die Achse kann im Zentrum liegen. Ferner ist es von Vorteil, dass eine von den aneinander liegenden Spannbacken und der Gelenkachse definierte Bezugsebene parallel zu einer von der Randkante des napfförmigen Stützkörpers definierten Befestigungsebene verläuft. Das freie Ende der Zugstange kann derart in der Gabelöffnung des Fortsatzes gelagert sein, dass das Spannglied in einander entgegengerichten Schwenkrichtungen in die Lösestellung verlagerbar ist. Dies hat zur Folge, dass das Saugnapfgerät auch im Bereich von Ecken problemlos montierbar ist. Die Breitflächen des Fortsatzes können zur Spannfläche des Fortsatzes trapezförmig verlaufen.

Nachfolgend wird ein Ausführungsbeispiel der Erfindung anhand beigefügter Zeichnungen erläutert. Es zeigen:

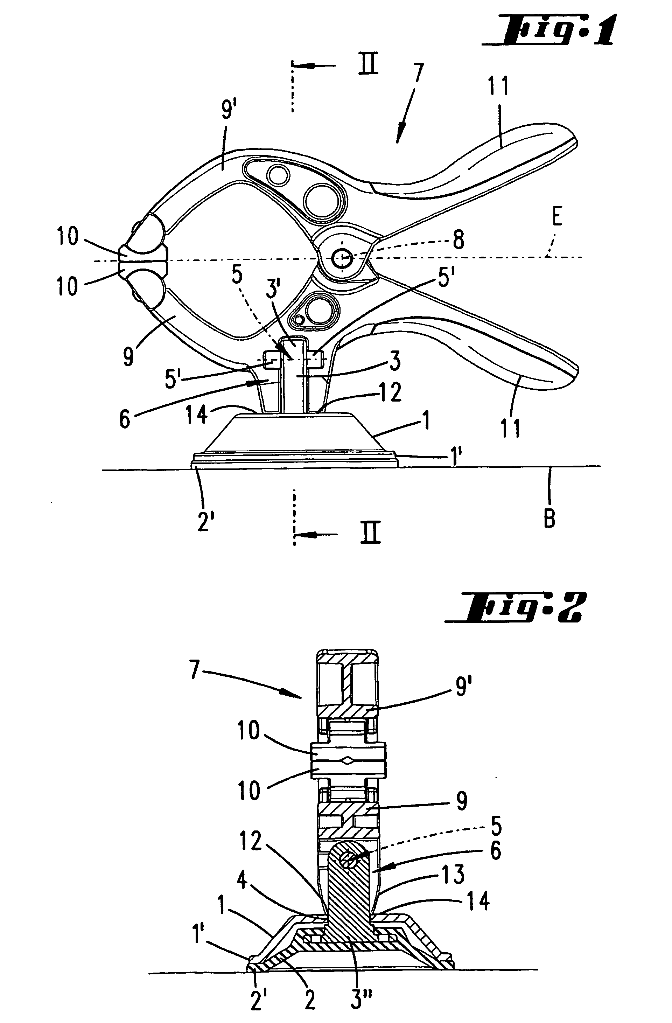

- Fig.1: das Saugnapfgerät in der Ansicht,
- Fig. 2: einen Schnitt gemäß der Linie II-II in Figur 1,

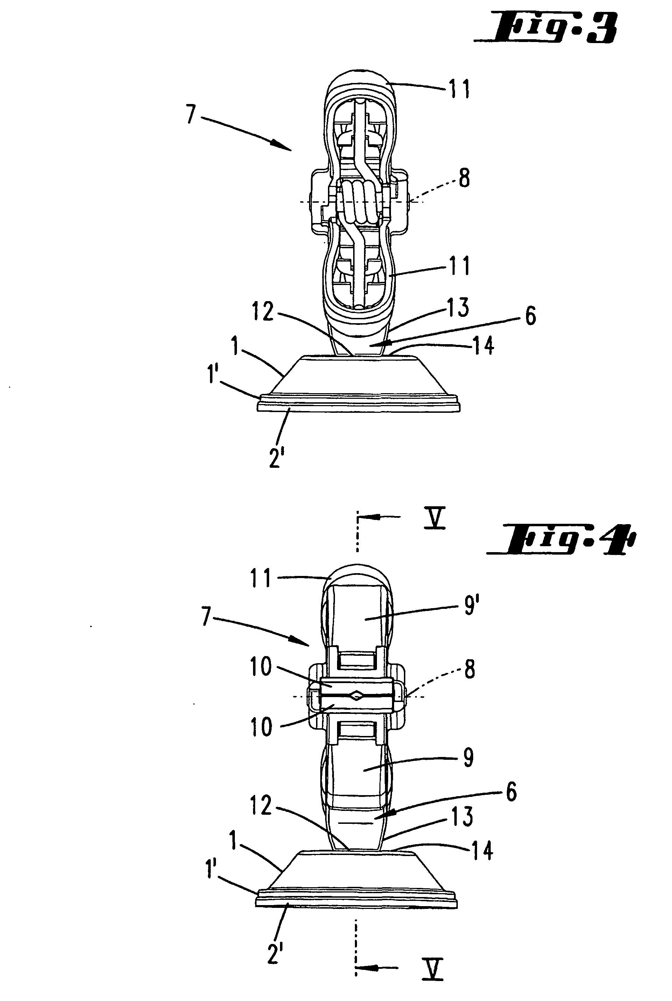

- Fig. 3: eine Rückansicht,
- Fig. 4: eine Frontansicht,

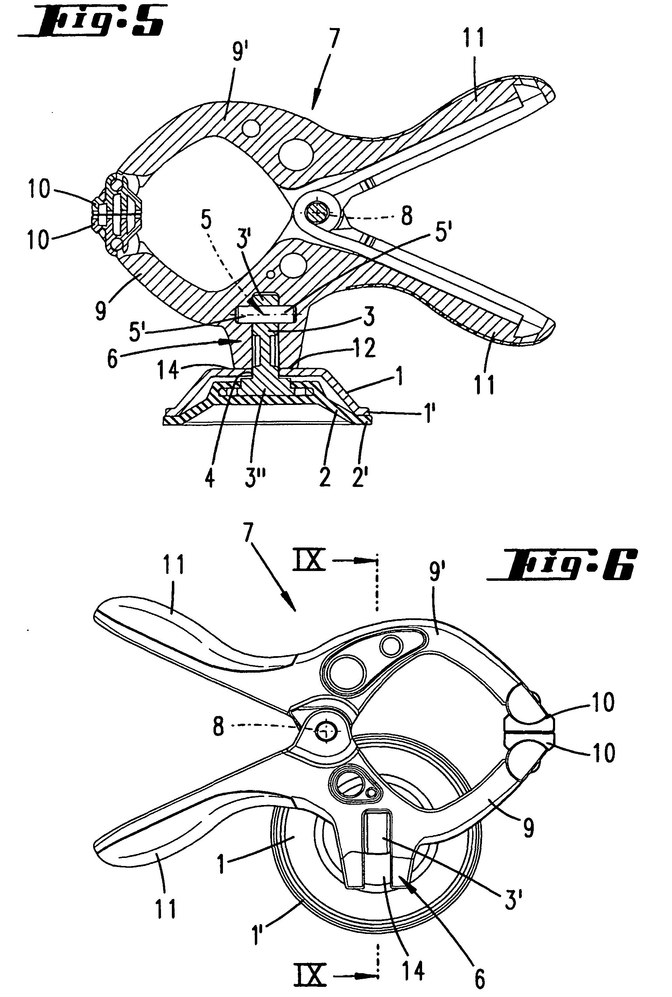

- Fig. 5: einen Schnitt gemäß der Linie V-V in Figur 4,
- Fig. 6: eine Draufsicht in der Lösestellung,
- Fig. 7: eine Rückansicht in der Lösestellung,
- Fig. 8: einen Schnitt gemäß der Linie VIII-VIII in Figur 7 und
- Fig. 9: einen Schnitt gemäß der Linie IX-IX in Figur 6.

Der Abschnitt, mit welchem das Saugnapfgerät an einer glatten, insbesondere in der Vertikalen verlaufenden Ebene befestigbar ist, besteht aus dem Stützkörper 1, welcher die Form eines Napfes besitzt. Die Ränder des Napfes verlaufen entlang eines Kegelstumpfes, so dass sich eine parallel zur Befestigungsebene B verlaufende Bodenaußenfläche 14 ausbildet. In der Höhlung des napfförmigen Stützkörpers 1 befindet sich eine Saugmembran 2 aus einem weichen Kunststoffmaterial. Die Saugmembran 2 besitzt ebenfalls eine napfförmige Gestalt. Der Rand 2' der Hauptmembran liegt 2 liegt unter der Randkante 1' des Stützkörpers 1. Im Zentrum der Saugmembran 2 greift mit einem ersten Ende 3" eine Zugstange 3 aus einem härteren Kunststoff an. Diese Zugstange 3 durchragt eine Öffnung 4, die sich im Zentrum der Bodenaußenfläche 14 befindet. Der die Öffnung 4 durchragende freie Abschnitt 3' der Zugstange 3 ragt in eine gabelförmige Öffnung eines Spanngliedes 6 ein. Dort durchragt das freie Ende 3' der Zugstange 3 eine Achse. Die beiden Enden 5' der Achse sind in dem Spannglied 6 gelagert.

Das Spannglied 6 wird von einem Fortsatz eines Federspannzwingenarms 9 ausgebildet. Der Arm 9 ist aus Kunststoff. Der Fortsatz ist dem Arm 9 angespritzt. Die Position des Fortsatzes liegt etwa zwischen dem Scheitel eines Spannabschnittes des Armes 9 und der Gelenkachse 8.An der Gelenkachse 8 ist der den Fortsatz 6 tragende Arm 9 mit einem im Wesentlichen gleichgestalteten Arm 9' gelenkverbunden. Mittels einer nicht dargestellten Spannfeder werden die Spannbacken 10, die sich an einem Ende eines jeden Armes 9,9' befinden, gegeneinander gedrückt. Die beiden anderen Enden der beiden Arme 9,9' bilden Betätigungsabschnitte 11 aus. Werden die beiden Betätigungsabschnitte 11 gegeneinander gedrückt, so öffnet sich das Spannmaul in dem die beiden Spannbacken 10 sich voneinander entfernen.

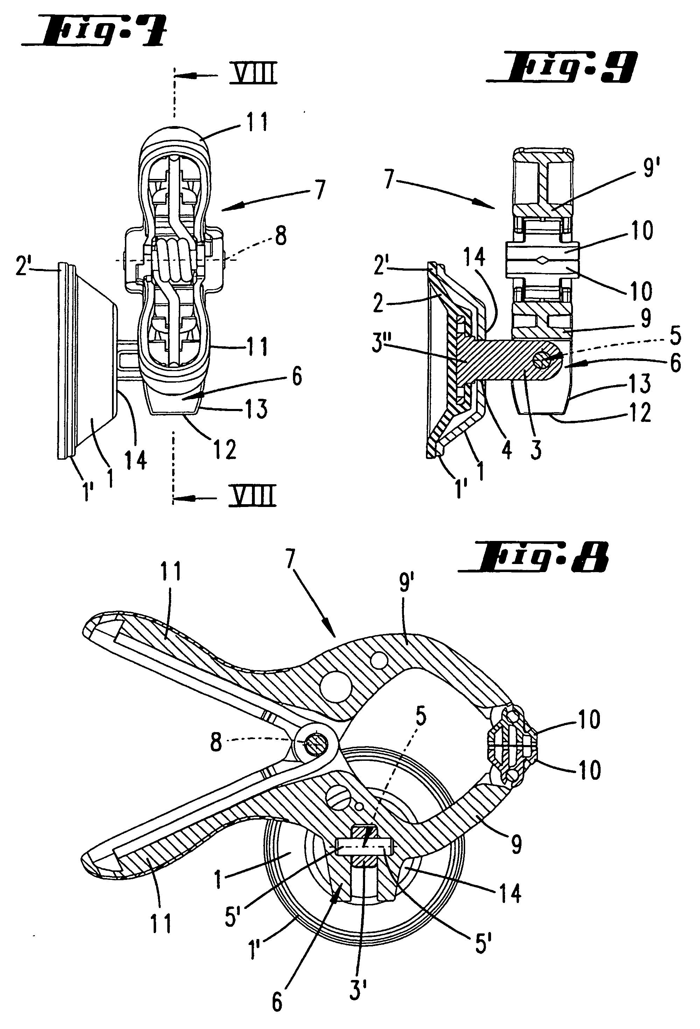

Das von dem Fortsatz gebildete Spannglied 6 besitzt zwei einander gegenüberliegende Breitseiten 13. Diese Breitseiten 13 sind von der Schwenkachse 5 geringer beabstandet, als eine Spannflanke 12, die die beiden Breitseitenflächen 13 miteinander verbindet. In einer Schwenkstellung, wie sie in den Figuren 6 bis 9 dargestellt ist, verläuft wahlweise eine der beiden Breitseiten 13 parallel zur Bodenaußenfläche 14. Dies hat zur Folge, dass sich die Zugstange in Richtung des Randes 1' des Stützkörpers verlagern kann, um die Lösestellung zu erzielen.

In dieser, in den Figuren 6 bis 9 dargestellten Lösestellung kann das Saugnapfgerät an eine glatte Oberfläche gebracht werden. Indem die Zugstange in die Öffnung 4 hineinverlagert wird, minimiert sich das Volumen zwischen der Höhlung der Saugmembran 2 und der glatten Oberfläche. Die Randkante 1' des Stützkörpers 1 drückt die Randkante 2' der Saugmembran gegen die glatte Oberfläche. Wird ausgehend aus dieser Position die Federspannzwinge um die Schwenkachse 5 geschwenkt, so tritt die Verbindungskante zwischen Breitseite 13 und Spannflanke 12 gegen die Bodenaußenfläche 14 des Stützkörpers 1. Diese Kante gleitet auf der Bodenaußenfläche 14 ab. Dies ist mit einer Auswärtsverlagerung der Zugstange 3 aus der Öffnung 4 verbunden. Einhergehend damit vergrößert sich das Volumen zwischen Höhlung der Saugmembran 2 und glatter Oberfläche, so dass sich dort ein Unterdruck einstellt. Nach Überschreiten der Totpunktstellung stützt sich das Spannglied 6 mit der Spannflanke 12 auf der Bodenaußenfläche 14 ab.

Bei der zuvor geschilderten Montage verläuft die Schwenkachse 5 in Vertikalrichtung. Dies hat zur Folge, dass die Spannbacken 10 nach unten weisen. Die durch die Spannbacken 10 und die Gelenkachse 8 definierte Ebene E verläuft parallel zu der von der Randkante 1' des Stützkörpers 1 definierten Befestigungsebene B. Die Schwenkachse 5 ist von der Gelenkachse 8 beabstandet. Die beiden Achsen verlaufen derart windschief zueinander, dass sie in einer Projektionsebene B sich rechtwinklig schneiden.

Das Saugnapfgerät wird zufolge des oben erwähnten Unterdrucks an der glatten Oberfläche gehalten. Wird zwischen die Spannbacken 10 ein Gegenstand, beispielsweise ein Handtuch gespannt, so wird dieses gehalten. Wird auf das Handtuch eine nach unten gerichtete Kraft ausgeübt, die größer ist, als die Haltekraft der beiden Spannbacken, so kann das Handtuch aus der Klemmlage zwischen den beiden Spannbacken 10 herausgezogen werden. Es ist denkbar, dass der Zug auf den eingeklemmten Gegenstand nicht in Richtung der Schwenkachse 5 erfolgt, sondern quer dazu, in Richtung der Gelenkachse 8. Bei einem Zug in dieser Richtung, die mit der Horizontalrichtung übereinstimmen kann, kann bei genügend großer Kraft die Federspannzwinge sogar um die Schwenkachse 5 verschwenkt werden, so dass sich das gesamte Saugnapfgerät von der glatten Oberfläche löst. Hierdurch ist quasi eine Überlastsicherung erzielt.

## Patentansprüche

1. Saugnapfgerät mit einem napfförmigen Stützkörper (1) und einer in der Napföffnung des Stützkörpers (1) einliegenden Saugmembran (2), an deren Zentrum eine Zugstange (3) angreift, die mit ihrem freien Ende (3') eine zentrale Öffnung (4) des Stützkörpers (1) durchragt, wobei an dem freien Ende (3') ein um eine Schwenkachse (5) schwenkbares Spannglied angelenkt ist, welches Spannglied (6) um eine Schwenkachse (5) von einer Lösestellung (Figuren 6 bis 9) über eine Totpunktlage in eine Spannstellung (Figuren 1 bis 5) schwenkbar ist, **dadurch gekennzeichnet, dass** dem Spannglied (6) eine Federspannzwinge zugeordnet ist, mit zwei um eine Gelenkachse schwenkbar miteinander verbundenen Armen (9,9'), die jeweils am einen Ende Spannbacken (10) und am anderen Ende Betätigungsabschnitte (11) aufweisen, wobei die Gelenkachse (8) quer zur Schwenkachse (5) verläuft.

2. Saugnapfgerät nach Anspruch 1 oder insbesondere danach, **dadurch gekennzeichnet, dass** die beiden Arme (9,9') wippenartig miteinander verbunden sind und die Betätigungsabschnitte (11) zum Auseinanderbringen der Spannbacken (10) gegen die Kraft einer Feder aufeinander zu bewegbar sind.

3. Saugnapfgerät nach einem oder mehreren der vorhergehenden Ansprüche oder insbesondere danach, **dadurch gekennzeichnet, dass** das Spannglied (6) einen zwei im Wesentlichen senkrecht oder trapezförmig zueinander stehende Flächen (12,13) aufweisenden Fortsatz (6) eines bogenförmigen Spannabschnittes einer der beiden Spannarme (9) ausbildet.

4. Saugnapfgerät nach einem oder mehreren der vorhergehenden Ansprüche oder insbesondere danach, **dadurch gekennzeichnet, dass** der Fortsatz (6) zwischen Bogenscheitel und Gelenkachse (8) angeordnet ist.

5. Saugnapfgerät nach einem oder mehreren der vorhergehenden Ansprüche 1 oder insbesondere danach, **dadurch gekennzeichnet, dass** eine von dem aneinander liegenden Spannbacken (10) und der Gelenkachse (8) definierte Bezugsebene (E) parallel zu einer von der Randkante (1') des Stützkörpers (1) definierten Befestigungsebene (B) verläuft.

6. Saugnapfgerät nach einem oder mehreren der vorhergehenden Ansprüche 1 oder insbesondere danach, **dadurch gekennzeichnet, dass** das freie Ende (3') der Zugstange (3) in einer Gabelöffnung des Fortsatzes (6) derart gelagert ist, dass das Spannglied in einander entgegengerichteten Schwenkrichtungen in die Lösestellung verlagerbar ist.

7. Saugnapfgerät nach einem oder mehreren der vorhergehenden Ansprüche 1 oder insbesondere danach, **dadurch gekennzeichnet, dass** die Breitseiten (13) des Fortsatzes (6) zur Spannfläche (12) trapezförmig verlaufen.

## Claims

1. Suction-cup device having a cup-like supporting body (1) and a suction diaphragm (2) which is positioned in the cup opening of the supporting body (1) and on the center of which there acts a pull rod (3), which projects through a central opening (4) of the supporting body (1) by way of its free end (3'), a clamping member which can be pivoted about a pivot pin (5) being articulated at the free end (3'), and it being possible for this clamping member (6) to be pivoted about a pivot pin (5) from a release position (figures 6 to 9), via a dead-center position, into a clamping position (figures 1 to 5), **characterized in that** the clamping member (6) is assigned a spring-action clamp clip, having two arms (9, 9') which are connected to one another such that they can be pivoted about an articulation pin and which each have clamping jaws (10) at one end and actuating sections (11) at the other end, the articulation pin (8) extending transversely to the pivot pin (5).

2. Suction-cup device according to claim 1 or in particular according thereto, **characterized in that** the two arms (9, 9') are connected to one another in a rocker-like manner, and the actuating sections (11) can be moved towards one another, counter to the force of the spring, in order to spread the clamping jaws (10) apart from one another.

3. Suction-cup device according to one or more of the preceding claims or in particular according thereto, **characterized in that** the clamping member (6) forms an extension (6) which has two surfaces (12, 13) located substantially perpendicularly or trapezoidally in relation to one another and which belongs to an arcuate clamping section of one of the two clamping arms (9).

4. Suction-cup device according to one or more of the preceding claims or in particular according thereto, **characterized in that** the extension (6) is arranged between the arc vertex and articulation pin (8).

5. Suction-cup device according to one or more of the preceding claims 1 or in particular according thereto, **characterized in that** a reference plane (E) defined by the abutting clamping jaws (10) and the articulation pin (8) runs parallel to a fastening plane (B) defined by the peripheral edge (1') of the supporting body (1).

6. Suction-cup device according to one or more of the preceding claims 1 or in particular according thereto, **characterized in that** the free end (3') of the pull rod (3) is mounted in a fork opening of the extension (6) such that the clamping member can be displaced into the release position in opposite pivoting directions.

7. Suction-cup device according to one or more of the preceding claims 1 or in particular according thereto, **characterized in that** the broad sides (13) of the extension (6) run trapezoidally in relation to the clamping surface (12).

## Revendications

1. Appareil à ventouse, comprenant un corps d'appui (1), en forme de ventouse, et une membrane d'aspiration (2), s'insérant dans l'ouverture de ventouse du corps d'appui (1), au centre de laquelle agit une tige de traction (3), qui traverse par son extrémité libre (3') une ouverture centrale (4) du corps d'appui (1), de sorte que, sur l'extrémité libre (3'), est articulé un organe de serrage susceptible de pivoter autour d'un axe de pivotement (5), lequel organe de serrage (6) est susceptible de pivoter autour d'un axe de pivotement (5), d'une position de désolidarisation (Figures 6 à 9), en passant par une position de point mort, pour aller à une position de serrage (Figures 1 à 5), **caractérisé en qu'**à l'organe de serrage (6) est associée une pince de serrage à ressort, comprenant deux bras (9, 9'), reliés ensemble à pivotement autour d'un axe d'articulation et présentant chacun, à une extrémité, des mâchoires de serrage (10) et, à l'autre extrémité, des tronçons d'actionnement (11), l'axe d'articulation (8) s'étendant transversalement par rapport à l'axe de pivotement (5).

2. Appareil à ventouse selon la revendication 1 ou en particulier comme suit, **caractérisé en ce que** les deux bras (9, 9') sont reliés ensemble à la façon d'une bascule et les tronçons d'actionnement (11) peuvent être déplacés l'un vers l'autre à l'encontre de la force d'un ressort pour séparer les mâchoires de serrage (10).

3. Appareil à ventouse selon l'une ou plusieurs des revendications précédentes ou en particulier comme suit, **caractérisé en ce que** l'organe de serrage (6) constitue un prolongement (6), présentant deux surfaces (12, 13) placées sensiblement perpendiculairement l'une par rapport à l'autre ou en forme de trapèze, prolongement d'un tronçon de serrage en forme d'arc d'un des deux bras de serrage (9).

4. Appareil à ventouse selon l'une ou plusieurs des revendications précédentes ou en particulier comme suit, **caractérisé en ce que** le prolongement (6) est disposé entre le sommet de l'arc et l'axe d'articulation (8).

5. Appareil à ventouse selon l'une ou plusieurs des revendications 1 précédentes ou en particulier comme suit, **caractérisé en ce qu'**un plan de référence (E), défini par les mâchoires de serrage (10) placées l'une sur l'autre et l'axe d'articulation (8), s'étend parallèlement à un plan de fixation (B) défini par l'arête de bordure (1') du corps d'appui (1).

6. Appareil à ventouse selon l'une ou plusieurs des revendications 1 précédentes ou en particulier comme suit, **caractérisé en ce que** l'extrémité libre (3') de la tige de traction (3) est montée dans une ouverture de fourche du prolongement (6), de manière que l'organe de serrage soit déplaçable à la position de désolidarisation, en suivant des sens de pivotement mutuellement opposés.

7. Appareil à ventouse selon l'une ou plusieurs des revendications 1 précédentes ou en particulier comme suit, **caractérisé en que** les faces larges (13) du prolongement (6) s'étendent en forme de trapèze par rapport à la surface de serrage (12).
